(19) Europäisches Patentamt
European Patent Office
Office européen des brevets

(11) Veröffentlichungsnummer: **0 454 661 A1**

## (12) EUROPÄISCHE PATENTANMELDUNG

(21) Anmeldenummer: 91890087.9

(22) Anmeldetag: 24.04.91

(51) Int. Cl.⁵: **F16L 33/02**

(30) Priorität: 26.04.90 AT 968/90

(43) Veröffentlichungstag der Anmeldung:
30.10.91 Patentblatt 91/44

(84) Benannte Vertragsstaaten:
CH DE IT LI

(71) Anmelder: Leitinger, Karl-Ernst Dr.
Schwarzenbergplatz 13
A-1040 Wien (AT)

(72) Erfinder: Wagner, Franz
Blindengasse 25
A-1080 Wien (AT)

(74) Vertreter: Weinzinger, Arnulf, Dipl.-Ing. et al
Riemergasse 14
A-1010 Wien (AT)

(54) Klemmanschluss für Rohre und Schläuche.

(57)    Klemmanschluß für Rohre und Schläuche aus Kunststoffmaterial. Der Klemmanschluß hat einen Rohrstutzen (2), auf den ein Ende des zu befestigenden Rohres oder Schlauches aufgeschoben und dort mit einer dieses Rohrende (6) umschließenden Rohrschelle (7) festgehalten ist. Die Rohrschelle (7) besteht aus einem Metallband, welches das festzuhaltende Rohrende umschließt, wobei an einem Bandende eine Reihe von Öffnungen (10) und am anderen Bandende ein Haken (12) vorgesehen ist, und beim Schließen der Rohrschelle eine solche Öffnung (10) mit dem Haken (12) in Eingriff gebracht wird. An dem den Haken (12) aufweisenden Bandende (11) der Rohrschelle (7) ist in Bandrichtung gesehen vor und nach diesem Haken (12) je ein aus dem Bandmaterial geformter, über die Bandfläche aufragender Führungsbügel (16) vorgesehen, durch den das die Öffnungen (10) aufweisende Bandende (9) durchgeschoben wird, bis eine der Öffnungen (10) mit dem Haken (12) bei festgezogener Rohrschelle in Eingriff kommt. Vorzugsweise ist der Rohrstutzen (2) an bzw. hinter einem Bund (25) mit einer Umfangsnut (24) versehen, in welche Zungen (23) eingreifen, die am einen Seitenrand (22) der Rohrschelle (7) zur Innenseite der Rohrschelle weisend vorgesehen sind.

FIG. 1

16 10 9 7 25
26
5 4 5 4 5
3
2 6 7 25 23 24 1

EP 0 454 661 A1

Die Erfindung bezieht sich auf einen Klemmanschluß für Rohre und Schläuche aus Kunststoffmaterial, von denen ein Ende auf einen Rohrstutzen eines Rohrformstückes aufgeschoben und mit einer dieses Ende umschließenden einteiligen Rohrschelle festgehalten ist, welche aus einem Metallband besteht, dessen beide Enden zum Umschließen des Rohrendes übereinandergelegt werden, wobei am einen Bandende eine Reihe von in Bandrichtung aufeinanderfolgenden Öffnungen und am anderen Bandende ein Haken vorgesehen ist und beim Schließen der Rohrschelle eine solche Öffnung mit dem Haken in Eingriff gebracht wird.

Es ist eine wie vorstehend angeführt ausgebildete Klemmschelle bekannt, bei der die beiden Enden des die Schelle bildenden Metallbandes beim Schließen der Klemmschelle einfach übereinandergelgt werden, wobei ein an dem einen Bandende angeformter Haken mit einer der am anderen Bandende vorgesehenen Öffnungen in Eingriff gebracht wird und dies die einzige Verbindung der beiden übereinandergelegten Bandenden bildet. Diese Klemmschelle hat zwar einen einfachen Aufbau, erfordert aber beim Schließen einen sehr exakten Kraftangriff bzw. eine sehr exakte Manipulation, was häufig nachteilig ist, und zwar insbesondere dann, wenn unter beengten Verhältnissen gearbeitet werden muß; es kann außerdem beim Schließen der Klemmschelle, wenn die Spannkraft bzw. Schließkraft aus irgendeinem Grund kurzzeitig eine Verminderung erfährt, zu einem unerwünschten Aufspringen der Klemmschelle, welches mit einem Abfallen oder Wegrutschen der Klemmschelle vom zu befestigenden Ende des Rohres oder Schlauches einhergehen kann. Bei einer anderen bekannten Klemmschelle ist am einen Bandende, welches Zähne trägt, die beim Schließen der Klemmschelle mit anderen Zähnen, die am anderen Bandende vorgesehen sind, in Eingriff gebracht werden, an jedem Rand des Bandes ein zur Bandmitte weisender Haltehaken vorgesehen, und es kann das andere Ende des Bandes beim Schließen der Klemmschelle unter diese Haltehaken eingeschoben werden, wobei durch die Haltehaken das eingeschobene Bandende in bezug auf das andere Bandende gegen seitliches Verschieben gesichert ist. Die durch diese Haltehaken gegebene Führung des einen Bandendes am anderen Bandende gibt nur eine geringe Unterstützung beim miteinander Ineingriffkommen der an beiden Bandenden vorhandenen Zähne und vermag auch nur einen sehr bescheidenen Beitrag zum Ineingriffhalten dieser Zähne zu geben; es ist beim Schließen dieser Klemmschelle ein exakter Kraftangriff erforderlich, um die an den beiden Bandenden vorgesehenen Zähne miteinander in Eingriff zu bringen, und es kann bei einem Nachlassen der Spannkraft zu einem unerwünschten Lösen bzw. Öffnen dieser Haltehaken kommen.

Es ist ein Ziel der vorliegenden Erfindung einen Klemmanschluß eingangs erwähnter Art zu schaffen, bei dem die Klemmschelle nicht nur einen einfachen Aufbau aufweist, sondern auch selbst unter schwierigen räumlichen Bedingungen auf einfache Weise geschlossen werden kann, wobei die für das Schließen der Haltehaken erforderlichen Vorgänge rasch ausführbar sein sollen und keine besondere Genauigkeit hinsichtlich des Angriffs der für das Schließen erforderlichen Kräfte erforderlich sein soll und außerdem ein guter Halt der Klemmschelle im Schließzustand gegeben sein soll.

Der erfindungsgemäße Klemmanschluß eingangs erwähnter Art ist dadurch gekennzeichnet, daß an dem den Haken aufweisenden Bandende der Rohrschelle in Bandrichtung gesehen vor und nach diesem Haken je ein aus dem Bandmaterial geformter, über die Bandfläche aufragender Führungsbügel vorgesehen ist, wobei das eine Reihe von Öffnungen aufweisende Bandende im geschlossenen Zustand der Rohrschelle durch die beiden Führungsbügel verläuft und beim Schließen der Rohrschelle die einen festen Sitz der Rohrschelle ergebende Öffnung unter elastischem Ausweichen des zwischen den beiden Führungsbügeln gelegenen Bandteiles mit dem Haken in Eingriff gesetzt wird. Mit dieser Ausbildung des Klemmanschlusses kann der vorstehend angeführten Zielsetzung gut entsprochen werden. Es kann das eine Reihe von Öffnungen aufweisende Bandende auf einfache Weise durch die beiden am anderen Bandende vorgesehenen Führungsbügel geschoben werden, wobei durch die dabei erzielte Führung des eingeschobenen Bandendes das weitere Zusammenschieben der beiden Bandenden gegen schrägen Kraftangriff unempfindlich ist und auch unter schwierigen räumlichen Verhältnissen das eine Reihe von Öffnungen aufweisende Bandende problemlos so weit eingeschoben werden kann, bis die Rohrschelle das an der jeweils vorliegenden Einsatzstelle vorliegende Ende des Rohres oder Schlauches zusammenziehend umfaßt und dabei eine der am einen Bandende aneinandergereiht vorgesehenen Öffnungen mit dem am anderen, die Führungsbügel tragenden Bandende vorgesehenen Haken in Eingriff kommt; die Führungsbügel, die sich zu beiden Seiten des erwähnten Hakens befinden, halten das die Öffnungen aufweisende Bandende gegen Abheben von dem den Haken aufweisenden Bandende sicher fest, so daß ein guter Halt der Rohrschelle gegen unbeabsichtigtes Lockern gegeben ist.

Eine weitere Verbesserung der Fixierung des Klemmanschlusses ist bei einer bevorzugten Ausführungsform gegeben, welche dadurch gekennzeichnet ist, daß am Rohrstutzen nach dem zum Aufschieben des Rohres oder Schlauches vorgesehenen Abschnitt ein Bund mit einer Umfangsnut vorgesehen ist, und am einen Seitenrand des die Rohrschelle bildenden Metallbandes zur Innenseite der Rohrschelle weisende Zungen vorgesehen sind, die in diese Umfangsnut einsetzbar sind.

Die Erfindung wird nun unter Bezugnahme auf Beispiele, welche in der Zeichnung dargestellt sind, weiter erläutert. In der Zeichnung zeigt:

Fig. 1 eine Ausführungsform eines erfindungsgemäßen Klemmanschlusses im Schnitt,

Fig. 2 eine Rohrschelle, wie sie beim Klemmanschluß nach Fig. 1 vorgesehen ist, in flachliegendem Zustand in Draufsicht,

Fig. 3 diese Rohrschelle in einer Seitenansicht und

Fig. 4 diese Rohrschelle im geschlossenen Zustand gleichfalls in Seitenansicht;

Fig. 5 zeigt eine sogen. Wandscheibe in Draufsicht, die mit einem zur Bildung eines erfindungsgemäßen Klemmanschlusses vorgesehenen Rohrstutzen versehen ist.

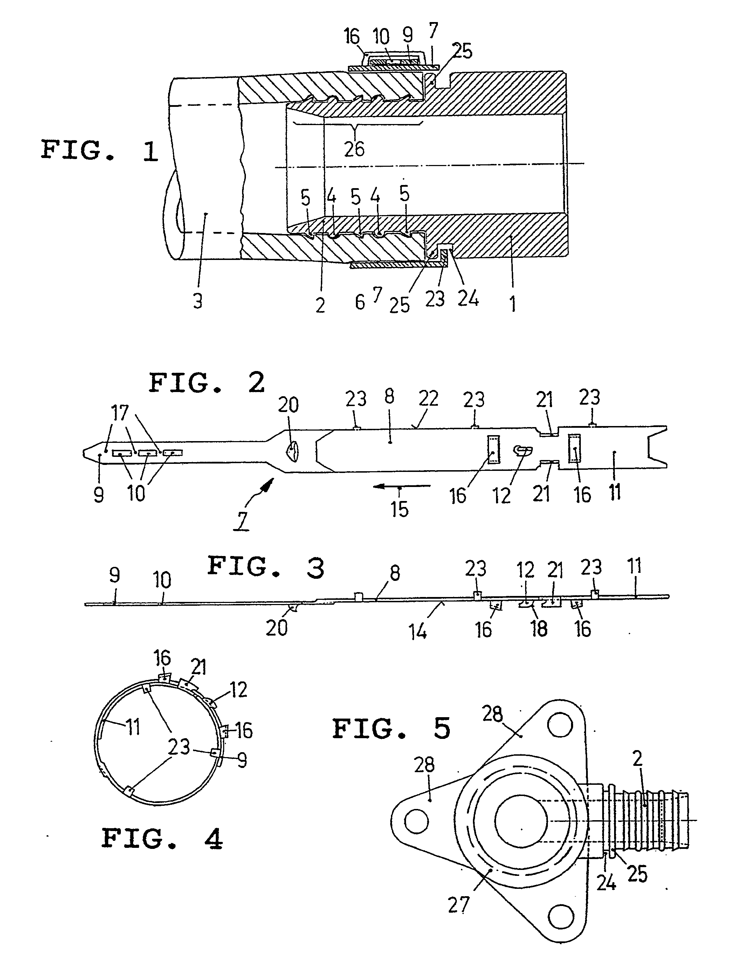

Bei der in Fig. 1 dargestellten Ausführungsform eines Klemmanschlusses ist ein Rohrformstück 1 mit einem Rohrstutzen 2 vorgesehen, auf den ein Ende eines aus Kunststoffmaterial bestehenden Rohres oder Schlauches 3 aufgeschoben ist. Der Rohrstutzen 2 hat an seiner Außenseite Ringrippen 4 und Zahnringrippen 5. Das Ende 6 des Rohres 3 ist mit einer einteiligen Rohrschelle 7, welche das Rohrende 6 umschließt, zusammengezogen und wird so am Rohrstutzen 2 festgehalten; die Fixierung des Rohres 3 am Rohrstutzen 2 wird dabei durch die Ringrippen 4 und die Ringzahnrippen 5 unterstützt, wobei durch das Zusammenziehen der Rohrschelle 7 die Innenseite des Rohres 3 gegen die Ringrippen 4 und Ringzahnrippen 5 gedrückt wird und dabei in die zwischen den Ringrippen und Ringzahnrippen vorliegenden Vertiefungen hineingepreßt wird.

Die Rohrschelle 7 besteht aus einem Metallband 8, und es ist am einen Bandende 9 eine Reihe von in Bandrichtung aufeinanderfolgenden Öffnungen 10 und am anderen Bandende 11 ein Haken 12 vorgesehen, der von der Bandfläche 14 aufragt und der beim Schließen der Rohrschelle mit einer der Öffnungen 10 in Eingriff gebracht wird.

An dem den Haken 12 aufweisenden Bandende 11 der Rohrschelle 7 ist in der durch den Pfeil 15 angedeuteten Bandrichtung gesehen vor und nach dem Haken 12 je ein aus dem Bandmaterial geformter, über die Bandfläche 14 aufragender Führungsbügel 16 vorgesehen.

Beim Schließen der Rohrschelle 7, d.h. wenn sie in den in Fig. 4 dargestellten geschlossenen Zustand gebracht wird, wird die Rohrschelle zu einem Ring gebogen, und das Bandende 9 wird durch die beiden Führungsbügel 16 durchgeschoben, so lange bis sich ein fester Sitz der Rohrschelle 7 auf dem auf den Rohrstutzen 2 aufgeschobenen Ende 6 eines Rohres 3 ergibt und dabei die bei diesem festen Sitz der Rohrschelle 7 an der Stelle des Hakens 12 befindliche Öffnung 10 mit dem Haken 12 in Eingriff kommt. Bis die betreffende Öffnung 10 mit dem Haken 12 in Eingriff kommt, gleiten beim Vorschieben des Bandendes 9 durch die Führungsbügel 16 die vor und zwischen den Öffnungen 10 befindlichen Stege 17 an der schrägen Rück flanke 18 des Hakens 12 auf, und es kommen im Zuge des Vorschiebens des Bandendes 9 durch die Führungsbügel 16 die Öffnungen 10 nacheinander mit dem Haken 12 in Eingriff; beim Aufgleiten der Stege 17 an der Rückseite 18 des Hakens 12 weicht dabei der zwischen den beiden Führungsbügeln 16 gelegene Teil des Bandes 8 immer wieder elastisch aus. Sobald die einen festen Sitz der Rohrschelle 7 ergebende Öffnung 10 mit dem Haken 12 in Eingriff ist, wird durch die Führungsbügel 16 eine stabile Fixierung dieses geschlossenen Zustandes der Rohrschelle gesichert.

Am Band 8 ist weiter eine Angriffsnase 20 angeformt, an der ein Werkzeug angesetzt werden kann, mit dem auf das Bandende 9, die zum Durchschieben durch die Führungsbügel 16 bis zum Erreichen eines festen Sitzes der Rohrschelle 7 auszuübende Kraft aufgebracht werden kann; ein solches Werkzeug kann z.B. in Form einer Zange ausgebildet sein; für den Gegenhalt eines solchen Werkzeuges kann man z.B. Stützfahnen 21 im Bereich des anderen Endes 11 des die Rohrschelle 7 bildenden Metallbandes 8 vorsehen. Man kann auch anstelle der Angriffsnase 20 Stützfahnen 21 vorsehen.

An einem Seitenrand 22 des die Rohrschelle 7 bildenden Metallbandes 8 sind Zungen 23 vorgesehen, welche im zur Ringform gebogenen (Fig. 4) Zustand der Rohrschelle 7, in dem die beiden Bandenden 9, 11 zum Umschließen des zu fixierenden Rohrendes 6 übereinandergelegt sind, zur Innenseite der Rohrschelle 7 weisen. Diese Zungen 23 sind in eine Umfangsnut 24 einsetzbar, welche an bzw. hinter einem Bund 25 vorgesehen ist, der sich am Rohrstutzen 2 nach dem zum Aufschieben des Rohres oder Schlauches 3 vorgesehenen Abschnitt 26 befindet. Durch den Eingriff der Zungen 23 in die Nut 24 ergibt sich ein sehr stabiler Halt der Rohrschelle 7 am Rohrstutzen 2 und damit auch ein besonders stabiles Festhalten von Rohren oder Schläuchen am Rohrstutzen 2.

Das Rohrformstück 1, welches mit einem Rohrstutzen 2 zur Bildung eines erfindungsgemäßen Klemmanschlusses versehen ist, kann selbst in verschiedenster Weise ausgebildet sein. Es kann z.B. die Form eines Rohrnippels wie bei der in Fig. 1 dargestellten Ausführungsform haben oder in Form eines anderen Verbindungsstückes, wie z.B. in Form einer sogen. Wandscheibe, ausgebildet sein. Ein Beispiel einer solchen Wandscheibe ist in Fig. 5 dargestellt, und es ist bei dieser Wandscheibe, welche eine Gewinderohrmuffe 27 und Befestigungsfüße 28 aufweist, in Fließverbindung mit der Gewinderohrmuffe 27 ein Rohrstutzen 2 vorgesehen, welcher ähnlich wie der in Fig. 1 dargestellte Rohrstutzen 2 ausgebildet ist und mit einer Umfangsnut 24 hinter einem Bund 25 versehen ist.

## Patentansprüche

1. Klemmanschluß für Rohre und Schläuche aus Kunststoffmaterial, von denen ein Ende auf einen Rohrstutzen eines Rohrformstückes aufgeschoben und mit einer dieses Ende umschließenden einteiligen Rohrschelle festgehalten ist, welche aus einem Metallband besteht, dessen beide Enden zum Umschließen des Rohrendes übereinandergelegt werden, wobei am einen Bandende eine Reihe von in Bandrichtung aufeinanderfolgenden Öffnungen und am anderen Bandende ein Haken vorgesehen ist und beim Schließen der Rohrschelle eine solche Öffnung mit dem Haken in Eingriff gebracht wird, dadurch gekennzeichnet, daß an dem den Haken (12) aufweisenden Bandende (11) der Rohrschelle (7) in Bandrichtung (15) gesehen vor und nach diesem Haken (12) je ein aus dem Bandmaterial geformter, über die Bandfläche aufragender Führungsbügel (16) vorgesehen ist, wobei das eine Reihe von Öffnungen (10) aufweisende Bandende (9) im geschlossenen Zustand der Rohrschelle (7) durch die beiden Führungsbügel (16) verläuft und beim Schließen der Rohrschelle (7) die einen festen Sitz der Rohrschelle (7) ergebende Öffnung (10) unter elastischem Ausweichen des zwischen den beiden Führungsbügeln (16) gelegenen Bandteiles mit dem Haken (12) in Eingriff gesetzt wird.

2. Klemmanschluß nach Anspruch 1, dadurch gekennzeichnet, daß am Rohrstutzen (2) nach dem zum Aufschieben des Rohres (2) oder Schlauches (3) vorgesehenen Abschnitt ein Bund (25) mit einer Umfangsnut (24) vorgesehen ist, und am einen Seitenrand (22) des die Rohrschelle (7) bildenden Metallbandes zur Innenseite der Rohrschelle (7) weisende Zungen (23) vorgesehen sind, die in diese Umfangsnut (24) eingesetzt werden.

FIG. 1

16 10 9 7 25

26

5 4 5 4 5

3 2 6 7 25 23 24 1

FIG. 2

17
20 23 8 22 23 21 23

9 10 7 15 16 12 21 16 11

FIG. 3

9 10 8 23 12 21 23 11

20 14 16 18 16

16 21
12
11 16
23 9

FIG. 4

FIG. 5

28
28 2

27 24 25

Europäisches
Patentamt

# EUROPÄISCHER RECHERCHENBERICHT

Nummer der Anmeldung

EP  91 89 0087

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-U-7 210 034  (GÖRG)<br>* Anspruch 1; Figuren 1-3 *<br>--- | 1 | F 16 L   33/02 |
| Y | US-A-3 049 778  (WECKESSER)<br>* Ansprüche; Figuren 1,2,7 *<br>--- | 1 | |
| A | US-A-4 468 840  (SAVER)<br>* Ansprüche 1-3,12-14; Figuren 1,2,5 *<br>--- | 1 | |
| A | GB-A-2 040 352  (LEGRAND S.A.)<br>----- | | |

RECHERCHIERTE SACHGEBIETE (Int. Cl.5)

F 16 L

Der vorliegende Recherchenbericht wurde für alle Patentansprüche erstellt

| Recherchenort | Abschlußdatum der Recherche | Prüfer |
|---|---|---|
| DEN HAAG | 11-07-1991 | BUDTZ-OLSEN A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument

EPO FORM 1503 03.82 (P0403)